(19) Europäisches Patentamt
European Patent Office
Office européen des brevets

(11) **EP 1 744 037 A1**

(12) **EUROPEAN PATENT APPLICATION**

(43) Date of publication:
**17.01.2007 Bulletin 2007/03**

(51) Int Cl.:
*F02D 35/00* (2006.01)  *F02D 41/40* (2006.01)

(21) Application number: **05106476.4**

(22) Date of filing: **14.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Ford Global Technologies, LLC.
Dearborn, MI 48126 (US)**

(72) Inventors:
• **Chevalier, Alain
4841, Henri-Chapelle (BE)**

• **Christen, Urs
52072, Aachen (DE)**
• **Vantine, Katie
52062, Aachen (DE)**
• **Moraal, Paul Eduard
6291 VP, Vaals (NL)**

(74) Representative: **Drömer, Hans-Carsten et al
Ford-Werke Aktiengesellschaft,
Patentabteilung NH/DRP,
Henry-Ford-Strasse 1
50725 Köln (DE)**

(54) **Method of controlling the start of combustion for an internal combustion engine**

(57)    A method of controlling the start of combustion is a HCCI internal combustion engine whereby a target start of combustion is determined as a function of engine speed and load, and the actual start of combustion, calculated using the measured in-cylinder pressure, is adjusted by means of a feed forward control loop to the target value.

Fig. 1

**Description**

The present invention relates to a method of controlling start of combustion (*SOC*) for an internal combustion engine provided with a crankshaft and at least one cylinder and operated in HCCI mode.

Traditionally, there have been two different engine types, namely diesel and gasoline engines. Both engines operate with different combustion processes which are different in particular in controlling the start of combustion (*SOC*). While diesel engines control *SOC* by the timing of fuel injection, in a gasoline engine, i.e., spark-ignited engine, the *SOC* is controlled by the spark timing. As a result both combustion processes have different characteristics.

Spark-ignited engines are characterized by low $NO_x$- and particulate emissions in comparison to diesel engines. Due to the externally-supplied ignition of a premixed charge forming a nearly homogenous air fuel mixture which tends to be either lean or close to stoichiometric, very low particulate emissions could be achieved taking into account that soot is formed under deficient air, preferably at an air/fuel ratio $\lambda \leq 0.7$. In addition the lower combustion temperatures of the gasoline engine process leads to significantly lower $NO_x$-emissions.

On the other hand the major advantage that diesel engines have over spark-ignited engines is higher thermal efficiency coming from the higher compression ratios which does not have to be limited as known from gasoline engines where compression ratio is restricted in order to avoid knocking, i.e., auto-ignition in some areas of the premixed charge. Another reason for the mentioned higher efficiency of diesel engines is caused by the fact that engine load is controlled by fuel quantity and not by a throttle, resulting in thermodynamic losses, in particular during the gas exchange.

However, diesel engines suffer from high $NO_x$ and particulate emissions. Due to the mixing controlled nature of diesel combustion a more or less large fraction of the injected fuel is not sufficiently mixed with the combustion, air resulting in an inhomogeneous charge which is in some areas rich, thus leading to particulate emissions. The combustion starts by auto-ignition when the mixture reaches a certain temperature, namely in charge areas where the air/fuel ratio is nearly stoichiometric, resulting in high process temperatures.

In the past the injection of fuel directly into the combustion chamber was a feature solely applied to diesel engines. Since the first direct injection gasoline engines are brought into the market, injecting fuel directly into the combustion chamber is no longer restricted to diesel engines.

However, it is believed that modem hybrid combustion processes have to be developed and improved in order to meet future US and European emission regulations. Such hybrid processes combine technical features which are traditionally assigned to diesel and gasoline engines, respectively, or make use of different combustion principles depending on the actual engine operating conditions, in particular engine load and engine speed.

An example for a so-called hybrid process is the homogeneous charge compression ignition (HCCI) which could be applied with some differences to both, diesel and gasoline engines. Sometimes this combustion principle is denoted as premixed charge compression ignition (PCCI). Hereinafter both are collectively referred to as HCCI or low temperature combustion (LTC).

The HCCI combustion process is based on auto-ignition of a relatively well premixed fuel/air mixture which occurs when the mixture reaches a certain temperature. As pointed out in EP 0 905 361 B1 experiments have revealed that one important condition for effectively realizing low temperature combustion is to terminate fuel injection during the ignition delay period, i.e., the ignition delay period has to be longer than the fuel injection period in which fuel is injected. While auto-ignition is well known from conventional diesel engines, the fuel and air are mixed, in the intake port or the combustion chamber, long before ignition occurs in such a way that the extent of the premixture preferably reaches a homogeneous or nearly homogeneous state. The latter is typical for conventional gasoline engines. Because of the well premixed nearly homogeneous charge auto-ignition starts — preferably simultaneously — in the whole charge, i.e., in many areas throughout the combustion chamber. In contrast to this, the mixture process of a conventional diesel engine is often injection controlled, so that the conditions for auto-ignition exist only in some or one area from which combustion disperses.

All in all, HCCI combustion is characterized in that combustion is initiated by compression ignition and in that a nearly homogeneous air/fuel mixture is formed before combustion starts, i.e., fuel injection is terminated before auto-ignition occurs.

As mentioned above and according to the state of the art, HCCI is restricted to specific operating conditions and cannot be applied throughout the entire engine operation map. The limitations of HCCI engines relate to controlling the ignition timing and the combustion rate at different operating conditions. This is because combustion starts by auto-ignition when the required conditions for auto-ignition are present in the premixed charge. Engine load and engine speed substantially influence ignition timing and the combustion rate. For these reasons, application of HCCI technology for an automotive engine which requires a wide range of operating conditions requires either measures for expanding the areas of application or the combination with other combustion principles.

US 6,390,054 B1 relates to an engine control strategy for a hybrid homogeneous charge compression ignition (HCCI) and spark ignition engine, and more particularly to a strategy for combustion mode transition between HCCI and SI engine operation.

US 6,390,054 B1 deals with the critical aspects concerning the application of HCCI in spark-ignited engines and addresses the underlying problem that ignition timing and combustion rate are more or less influenced by the operating conditions, i.e., by engine load and engine speed. Because the air/fuel mixture is formed before start of combustion (*SOC*) and earlier before top dead centre (TDC) auto-ignition can occur at any time during the compression process.

Thus, as the engine load increases, the ignition tends to advance, and the combustion rate tends to increase due to richer mixture. The thermal efficiency may also decrease due to the early heat release before TDC, and the engine becomes rough due to fast and early combustion. When the engine load decreases, the ignition tends to be retarded which may eventually result in misfiring as well as an increase in HC and CO emissions. When the engine speed increases, the location for the main heat release tends to be retarded since the time available for low temperature preliminary reaction of the diluted mixture becomes insufficient and misfiring may occur.

Because HCCI engine operation is directly related to the intake air charge temperature, US 6,390,054 B1 suggests equipping the engine with several systems/devices for controlling the intake air charge temperature. These systems include an exhaust gas recirculation EGR and/or a heat exchanger or the like.

By decreasing the air charge temperature, the HCCI operating range can be extended to higher loads due to the fact that when charge temperature is decreased, the ignition tends to be retarded. In other words, the ignition delay can be raised by cooling the air fed to the cylinders. This can be done by reducing the internal exhaust gas recirculation, by controlling the coolant temperature, by retarding the intake valve closing time to reduce the effective compression ratio, by using cooled external exhaust gas recirculation, or by supercharging with an intercooler.

Conversely, the performance of HCCI operation can be improved under lower part load by increasing the charge temperature, i.e., by heating the intake air or using more exhaust gas recirculation or by using engine coolant control. The same measures can be used to improve the behaviour during high engine speed operation.

The prior discussion shows that it is essential to monitor and supervise the combustion, i.e., the combustion stability, in particular to take measures if misfiring or the like occurs. Furthermore it is necessary to monitor and control the combustion rate and combustion duration in order to avoid engine operation becoming rough due to fast and early combustion and to avoid a thermal efficiency decrease due to a too early heat release before TDC.

US 2004/0103860 A1 also relates to an optimized combustion control for a premixed charge compression ignition engine. The suggested control strategy aims to maintain a stable, efficient HCCI combustion with low emissions by controlling the time at which combustion occurs (*SOC*), the duration of combustion and the rate of combustion. The control is outlined in detail, i.e., control start of combustion to the interval [-20,10] °CA (crank angle), preferably to [-10,5] °CA; and control combustion duration to 5 - 30 °CA. This is achieved for example by controlling the temperature of the fresh cylinder charge, for instance by controlling the temperature of the intake air or by controlling the cylinder charge temperature. In addition or alternatively intake manifold pressure, in-cylinder pressure or air/fuel ratio may be controlled to influence start of combustion and combustion duration.

While conventional diesel engines control *SOC* by the timing of fuel injection, i.e., by the start of injection *SOI,* US 2004/0103860 A1 pointed out that the start of injection *SOI* in a HCCI engine does not strongly affect the start of combustion *SOC.* Due to this US 2004/0103860 A1 does not suggest to control start of combustion *SOC* by start of injection *SOI.* Unlike in a conventional diesel engine, the fuel injection in a HCCI engine is terminated before ignition occurs as mentioned above. That means fuel injection is terminated during the ignition delay period, i.e., the ignition delay period has to be longer than the fuel injection period in which fuel is injected.

Because start of combustion *SOC* is less strongly affected by the start of injection *SOI* due to the relative extensive ignition delay, the combustion and in particular the start of combustion *SOC* is more sensitive to changes in the operating and boundary conditions, such as engine load, engine speed, coolant water temperature, fuel quality, recirculated exhaust gas mass and the like. Auto-ignition of the air/fuel mixture formed before start of combustion *SOC* can occur at any time during the compression process, as soon as the conditions for auto-ignition are reached.

However, there is a need for robustifying low temperature combustion and in particular for a method of controlling start of combustion *SOC* in a HCCI engine.

US 2004/0103860 A1 also discloses that start of combustion and combustion duration can be influenced and controlled by fuel properties. According to US 2004/0103860 A1 a control system is formed by using two fuels with different properties which are mixed online in order to vary auto-ignition properties. Therefore the first fuel has a first auto-ignition property and the second fuel has a second auto-ignition property different from first auto-ignition property.

On the one hand low temperature combustion (LTC) is sensitive to changes in engine operating conditions as discussed above. On the other hand the last mentioned technical teaching about influencing the combustion by varying fuel properties underlines how sensitive low temperature combustion (LTC) is also to changes in the boundary conditions, such as fuel quality, coolant water temperature, or the like.

EP 0 905 361 B1 relates to improvements in a combustion control system for a diesel engine and also addresses the importance of fuel properties with respect to low temperature combustion. It is pointed out that the ignition delay period and thus the start of combustion can be influenced and controlled by fuel properties, in particular by the cetan number of the fuel used. One problem to be solved is to prevent the start of combustion while fuel is injected.

One conclusion which can be drawn from the control systems well known in the state of the art and described above is that there is a need for a method of controlling start of combustion $SOC$ in a HCCI engine. Due to the fact that start of combustion $SOC$ is less strongly affected by the start of injection $SOI$, $SOI$ is not appropriate to be used as manipulated variable in order to control start of combustion with feedforward control only, as known from conventional diesel engine control systems. For HCCI engine control systems, it is important to ensure that $SOC$ can be controlled in a more sophisticated manner, especially for future, more stringent emissions standards.

With respect to this it is an object of the present invention to provide a method of controlling start of combustion $SOC$ for an internal combustion engine equipped with a crankshaft and at least one cylinder and operated in HCCI mode, which overcomes the problems described above, in particular a method which takes into account that with respect to HCCI engines the control of the start of combustion $SOC$ is much more difficult due to the characteristics of this specific combustion mode in question.

According to the present invention and with respect to the object, a method of controlling start of combustion $SOC$ by means of feedback control is provided for an internal combustion engine equipped with a crankshaft and at least one cylinder and operated in HCCI mode, wherein

■ the setpoint $SOC_{setpt}$ for start of combustion is computed from at least one of engine speed and engine load and, if necessary, additional signals characterizing the engine operating conditions,

■ said setpoint $SOC_{setpt}$ is converted within a feedforward path into a first manipulated variable $var_A$ which is appropriate and used to influence, i.e., to adjust, start of combustion $SOC$,

■ the in-cylinder pressure $p_{cyl}$ created by burning the fuel injected during injection pulse duration is measured and used for calculating actual start of combustion $SOC$,

■ said actual start of combustion $SOC$ is controlled to the setpoint $SOC_{setpt}$ via feedback control, i.e., by closing the control loop by means of a feedback path, in order to adjust said actual start of combustion $SOC$,

■ said feedback path is provided with a first controller which uses, possibly in addition to other signals, hereinafter referred to as additional signals, which describe the engine operating conditions, the deviation $\Delta SOC$ between setpoint $SOC_{setpt}$ and actual value $SOC$ for the start of combustion as an input and provides a correction $\Delta var_{A,fb,l}$ of said first manipulated variable $var_A$ as output data to adjust said first manipulated variable $var_A$ and thus said actual start of combustion $SOC$,

■ said first controller is provided with a low bandwidth $b_{low}$ due to noise on the measured in-cylinder pressure signal, $p_{cyl}$, and thus on the calculated start of combustion, $SOC$, in order to make said first manipulated variable $var_A$ less sensitive to the noise of $SOC$ by slowing down the convergence of the actual value $SOC$ to the setpoint $SOC_{setpt}$, if deviation $\Delta SOC$ is affected substantially by signal noise, or in order to provide corrections $\Delta var_{A,fb,l}$ only during nearly stationary operation.

Experiments have revealed that the control of $SOC$ can be improved by feedback control according to the inventive method. For modem control systems for internal combustion engines - both diesel and gasoline engines - it is important to ensure that $SOC$ is consistent under steady-state conditions, especially for future, more stringent emissions standards.

According to the state of the art $SOC$ is usually not measured such that the setpoint for $SOC$ which is computed from signals describing engine operating and/or boundary conditions, for example engine load and engine speed, is achieved with feedforward control only. The advantage of this feedforward control is that it is very fast. At tip-in, the setpoint for $SOC$ can be changed substantially from one combustion event to the next. However, due to the fact that low temperature combustion is less stable than conventional combustion and more sensitive to changes in operation and boundary conditions, the $SOC$ achieved will never match the setpoint exactly.

One way of dealing with this problem is to use feedback control as suggested and recommended by the present invention. Consistency for $SOC$ can be achieved, i.e., can be improved in comparison to the feedforward control by closing the loop on $SOC$ such that the produced actual $SOC$ is controlled to the setpoint $SOC_{setpt}$. $SOC$ can be derived from in-cylinder pressure measurements and be used for feedback control.

The deviation $\Delta SOC$ between setpoint $SOC_{setpt}$ and actual value $SOC$ for the start of combustion is used to provide a correction $\Delta var_{A,fb,l}$ of a first manipulated variable $var_A$ to adjust said first manipulated variable $var_A$ and thus said actual start of combustion $SOC$.

In order to avoid undesired interaction between the steady state robustification and transient control, i.e., control to achieve speed and/or load changes, or transition control, i.e., control to change the operating mode between LTC and conventional combustion, all the robustifying feedback actions have to be slow.

To meet this requirement said first controller is provided with a low bandwidth $b_{low}$ in order to keep the convergence of the actual value $SOC$ to the setpoint $SOC_{setpt}$ slow, if deviation $\Delta SOC$ is affected substantially by signal noise on the calculated start of combustion $SOC$. Moreover the low bandwidth ensures that said correction $\Delta var_{A,fb,l}$ is only provided by the controller during nearly stationary operation. During transient engine operation the signals forwarded as input data to the first controller shall be damped.

Within the scope of the present invention low bandwidth means that the output signal of the first controller, i.e., said correction $\Delta var_{A,fb,l}$ converges within 50 engine operation cycles or more, preferably 100 engine operation cycles or more.

In the following preferred embodiments are discussed according to the dependent claims.

A preferred embodiment of the method is characterized in that

■ said deviation $\Delta SOC$ between setpoint $SOC_{setpt}$ and actual value $SOC$ for the start of combustion is used as an input for updating at least one lookup table storing the correction $\Delta var_{A,fb,l}$ of said first manipulated variable $var_A$ as output data,

■ said additional signals are used for scheduling said at least one lookup table in order to enable a fast controller reaction during transient conditions, when the engine operating conditions are changing such that the correction $\Delta var_{A,fb,l}$ of said manipulated variable $var_A$ is read out from said at least one lookup table by using the scheduling parameters as input data.

As mentioned above feedback control has to be slow here. The deviation $\Delta SOC$ between setpoint $SOC_{setpt}$ and actual value $SOC$ for the start of combustion is used via feedback path as an input for updating said at least one lookup table when the engine operates under steady-state conditions or nearly steady-state conditions.

On the other hand the bandwidth $b_{low}$ of the controller is too low for sufficiently fast reactions during transients. To overcome this problem, the controller is scheduled on relevant parameters, i.e., variables, preferably on signals describing the engine operation conditions, in particular engine speed N and load $T_{ind,setpt}$ and/or engine temperature ($\vartheta_{eng}$), for example. Thus, at each operating point described by these scheduling variables, the correction $\Delta var_{A,fb,l}$ of the manipulated variable $var_A$ can be read out from said at least one lookup table as output data by using the scheduling parameters as input data. This enables a fast controller reaction during transient conditions. The bandwidth $b_{low}$ can be scheduled, too.

The controller can adapt slowly, and when a fast change to a different operating condition occurs, the controller can quickly change to those controller settings, i.e., locations in the lookup table, which had been adapted slowly during a previous visit of that operating point. With respect to that issue it is referred to the application 204 - 1366 filed by the Ford Global Technologies, LLC.

This application relates to a method for automatically adapting lookup tables, in particular for use in a control unit for an internal combustion engine, wherein the lookup table is a one-dimensional or multi-dimensional point-based lookup table with $n \geq 1$ indexing parameters x as input data and in which the output data are stored at the points.

A preferred embodiment of the method is characterized in that said bandwidth $b_{low}$ is lower than each of the frequencies $f_i$ with large magnitude in the spectrum of the calculated $SOC$, such that the relation between the bandwidth $b$ and the frequencies $f_i$ is described by the following expression: $b_{low} < f_i$.

According to the inventive method, the controller is equipped with a low bandwidth b such that the changes of said manipulated variable $var_A$ are damped, if deviation $\Delta SOC$ is affected substantially by signal noise or if the deviation $\Delta SOC$ is caused by a change in engine operating conditions. For this it is preferred, that the bandwidth $b_{low}$ is lower than each of the frequencies $f_i$ with large magnitude in the spectrum of the calculated, i.e., measured $SOC$ (Fourier analysis). At steady-state, $SOC$ is recorded and then Fourier transformed. The resulting spectrum shows which frequencies are present — ideally only 0 Hz, since it is steady state; any other frequencies with large magnitude result from signal noise. Thus, the relation between the bandwidth $b_{low}$ and the frequencies $f_i$ is described by the following expression: $b_{low} < f_i$. Because of this setup the controller acts like a low-pass filter with respect to the signal noise. Hence the controller is enabled to deal with the signal noise and transient conditions.

A preferred embodiment of the method is characterized in that

■ said feedback path is provided with a second controller which uses, possibly in addition to other signals which describe the engine operating conditions, the deviation $\Delta SOC$ between setpoint $SOC_{setpt}$ and actual value $SOC$ for the start of combustion as an input and provides a correction $\Delta var_{A,fb,h}$ of said first manipulated variable $var_A$ as output data to adjust said first manipulated variable $var_A$ and thus said actual start of combustion $SOC$,

■ said second controller is located in parallel to said first controller and in addition is provided with a high bandwidth

$b_{high}$ in order to control transient behaviour and with high-pass characteristics in order not to influence the steady-state behaviour

With respect to the last mentioned embodiment a preferred method is characterized in that said bandwidth $b_{high}$ is higher than the bandwidth $b_{low}$ of said first controller: $b_{high} > b_{low}$.

Within the scope of the present invention high bandwidth means that the output signal of the second controller, i.e., said correction $\Delta var_{A,fb,h}$ converges within 10 engine operation cycles or less, preferably 5 engine operation cycles or less.

As a result the second controller does not influence the steady-state behaviour of the first controller. Said second controller can be considered to be disabled when the engine operates under steady-state conditions. On the other hand such a high bandwidth $b_{high}$ enables the second controller to control the start of combustion SOC during transient engine operation conditions under which the low bandwidth $b_{low}$ of said first controller prevents the passing of signals completely or just strongly damped.

Even if adaptive maps are used which enables the controller to react immediately when a fast change to a different engine operating condition occurs, it has to take into account that the lookup tables are generated for steady-state engine operation. Although the controller can quickly change to those controller states, i.e., locations in the lookup table, which corresponds to the actual engine operating conditions described by the additional signals, said corrections stored in these engine operating dependent locations of said at least one lookup table are based on the assumption that the engine is already operating under steady-state conditions in the novel operating point.

Because of this a controller is needed to control start of combustion SOC during transition from one engine operating point to another engine operating point in order to achieve engine speed and/or engine load changes.

A preferred embodiment of the method is characterized in that start of injection (SOI) is used as first manipulated variable $var_A$, i.e., the correction $\Delta SOI_{fb,l}$ of start of injection SOI with respect to the first controller and possibly in addition the correction $\Delta SOI_{fb,h}$ of start of injection SOI with respect to the second controller in order to adjust SOI and thus to adjust said actual start of combustion SOC.

Although it is constituted in the state of the art with respect to the HCCI-mode that the start of injection SOI does not strongly affect the start of ignition SOI and consequently SOI obviously seems not to be suitable for controlling start of combustion SOC, experiments have revealed that SOI can be used as manipulated variable within the present invention, i.e., when start of combustion SOC is controlled by feedback control according to the inventive method.

A preferred embodiment of the method is characterized in that start of combustion SOC is defined by a specific predetermined percentage for burnt fuel mass of the fuel injected during fuel injection duration. For this it is recommended to use the heat release

Net heat release rate [J/°] is given by

$$\frac{dQ_{HR}}{d\theta} = \frac{1}{\gamma - 1}\left(\gamma p \frac{dV}{d\theta} + V \frac{dp}{d\theta}\right)$$

where V is the cylinder volume as a function of crank angle $\theta$, p is the in-cylinder pressure, and $\gamma$ is the specific heat ratio. Net heat release is then the integral of the expression above from start of combustion to end of combustion. However, start and end of combustion are not known a priori. Start of combustion can be replaced by the start of the first injection ($SOI_{pilot}$). For end of combustion, $\theta_e$, either a fixed angle could be considered (e.g., 60° after $SOI_{main}$) or the location of the maximum heat release could be defined as being this end of combustion. Hence, heat release [J] may be computed as:

$$Q_{HR} = \max_{\theta_e} \int_{SOI_{pilot}}^{\theta_e} \frac{1}{\gamma - 1}\left(\gamma p \frac{dV}{d\theta} + V \frac{dp}{d\theta}\right)d\theta$$

This way of computing heat release gives errors if there is an offset in the in-cylinder pressure. In order to get an algorithm which is insensitive to offsets, the integration can be done over an interval which is symmetric with respect to top dead centre:

$$Q_{HR} = \int_{-\theta_{HR}}^{\theta_{HR}} \frac{1}{\gamma - 1}\left(\gamma p \frac{dV}{d\theta} + V \frac{dp}{d\theta}\right) d\theta$$

Once cumulated heat release has been computed as a function of crank angle, the location of, for instance, 5% fuel mass burned can be computed. This is done by looking for the minimum and the maximum values of $Q_{HR}(\theta)$ and then finding the location, i.e., the crank angle $\theta_{05}$ where 5% cumulated heat release is crossed:

$$\theta_{05} = \arg\{Q_{HR}(\theta) = Q_{HR,min} + 0.05(Q_{HR,max} - Q_{HR,min})\}$$

In order to robustify this calculation, $Q_{HR,min}$ can be restricted to occur after start of injection *SOI* for a particular injection, e.g., for the main injection. In a similar way, locations of other percentages of fuel mass burned can be defined, for example $\theta_{20}$ or $\theta_{50}$.

Experimental data has shown that standard variation of $\theta_{20}$ or $\theta_{50}$ is much larger than that of $\theta_{05}$; even that of $\theta_{10}$ is larger than that of $\theta_{05}$.

A preferred embodiment of the method is characterized in that in addition combustion speed *(CG)* is controlled by means of a feedback path, i.e., by means of feedback control, wherein

■ the setpoint $CG_{setpt}$ for combustion speed is computed from at least engine speed and engine load and, if necessary, additional signals characterizing the engine operating conditions,

■ the in-cylinder pressure $p_{cyl}$ is used for calculating actual combustion speed *CG,*

■ said actual combustion speed *CG* is controlled to the setpoint $CG_{setpt}$ via feedback control in order to adjust said actual combustion speed *CG,*

■ said feedback path is provided with a third controller which uses the deviation $\Delta CG$ between setpoint $CG_{setpt}$ and actual value *CG* for the combustion speed as an input and provides a correction $\Delta var_B$ of a second manipulated variable $var_B$ which is appropriate to influence combustion speed *CG,* and

■ using said correction $\Delta var_B$ as output data to adjust said second manipulated variable $var_B$ and thus to adjust said actual combustion speed *CG.*

With respect to this method embodiments are preferred which are characterized in that said combustion speed *CG* is computed from a crank angle interval it takes to burn a certain predetermined percentage of fuel mass injected during fuel injection duration.

For instance:

$$CG = \frac{45}{\theta_{50} - \theta_{05}}$$

for going from 5% to 50% fuel mass burned. In fact, said definition is the preferred one because it is the one most sensible for LTC investigation. Other intervals show larger variation or less sensitivity to LTC operation.

However, the calculated combustion speed *CG* represented by the combustion gradient is controlled to the setpoint $CG_{setpt}$ via feedback control by determining the deviation $\Delta CG$ between setpoint $CG_{setpt}$ and actual value *CG* for the combustion speed. Subsequently this deviation $\Delta CG$ is used as an input for a controller which provides a correction

$\Delta var_B$ of a suitable manipulated variable $var_B$ appropriate to influence combustion speed $CG$ as output data in order to adjust combustion speed $CG$.

A preferred embodiment of the method is characterized in that

■ said deviation $\Delta CG$ between setpoint $CG_{setpt}$ and actual value $CG$ for the combustion speed is used as an input for updating at least one lookup table storing a correction $\Delta var_B$ of a second manipulated variable $var_B$ as output data,
■ said at least one lookup table uses scheduling variables describing the engine operating conditions as input data, so that said correction $\Delta var_B$ is engine operating point dependent.

This preferred embodiment is characterized in that adaptive maps are used for controlling combustion speed $CG$, too. The advantages of using adaptive maps are pointed out already. It is referred to the above given explanations with respect to the embodiment according to claim 2. The controller, i.e., the at least one respective lookup table can be updated during steady state, and when a fast change to a different engine operating condition occurs, the controller can quickly change to those controller states, i.e., locations in the at least one lookup table, which had been updated slowly during a previous visit of that operating point under steady-state conditions.

A preferred embodiment of the method is characterized in that the burnt mass fraction $F_i$ in the cylinder charge is used as second manipulated variable $var_B$ by providing a correction $\Delta F_{i,CG}$ of burnt mass fraction setpoint $F_{i,setpt}$ with respect to the third controller in order to adjust $F_{i,setpt}$ and thus to adjust said actual combustion speed $CG$.

As described in US 6,390,054 B1 HCCI-engine operation is directly related to the intake air charge temperature which can be influenced by means of exhaust gas recirculation (EGR) and/or a heat exchanger or the like.

By increasing the burnt mass fraction $F_i$ the charge temperature is also increased. Thus the ignition tends to advance. With respect to the combustion rate, i.e., the combustion speed in question the oxygen content in the fresh cylinder charge is the most relevant factor which also can be influenced and controlled by the burnt mass fraction $Fi$ in the cylinder charge. While the ignition tends to advance if the burnt mass fraction $Fi$ is increased, the combustion speed $CG$ is reduced due to the lower oxygen content in the charge. As a result the combustion temperature is lowered and the NOx-emissions are reduced. Conversely combustion speed $CG$ can be increased by providing more oxygen, for example by lowering the burnt mass fraction $F_i$.

Due to these effects it is preferred to increase the burnt mass fraction $F_i$, i.e., $F_{i,setpt}$ in order to lower combustion speed $CG$ and to decrease the burnt mass fraction $F_i$, i.e., $F_{i,setpt}$ in order to increase combustion speed $CG$.

A preferred embodiment of the method is characterized in that combustion stability $stab$ is monitored by the following steps:

■ determining the absolute deviation $e$ of indicated mean effective pressure $p_{ind}$ or indicated torque $T_{ind}$ with respect to their actual setpoint, i.e., with respect to actual indicated mean effective pressure setpoint $p_{ind,setpt}$ or actual indicated torque setpoint $T_{ind,setpt}$, namely $\Delta p_{ind}$ or $\Delta T_{ind}$, or alternatively determining the relative change $\Delta e$ in said deviation between two consecutive combustion cycles $k, k+1$ of said at least one cylinder, i.e., determining $(\Delta p_{ind,k+1} - \Delta p_{ind,k})$ or $(\Delta T_{ind,k+1} - \Delta T_{ind,k})$ or determining the relative change $\Delta e$ in angular acceleration $\omega'$ of the crankshaft between two consecutive combustion cycles $k, k+1$, i.e., $(\Delta \omega'_{k+1} - \Delta \omega'_k)$, and

■ comparing said determined deviation $e$ or said change $\Delta e$ with a predetermined engine operating point dependent threshold $e_{threshold}$ or $\Delta e_{threshold}$ in order to decide if the combustion is stable or not by means of the following inequalities:

$$|e| > e_{threshold} \text{ or } |\Delta e| > \Delta e_{threshold} \text{ means combustion is unstable,}$$

$$|e| \leq e_{threshold} \text{ or } |\Delta e| \leq \Delta e_{threshold} \text{ means combustion is stable.}$$

A preferred embodiment of the method is characterized in that, if combustion is unstable, combustion stability $stab$ is controlled by means of

■ a third manipulated variable $var_C$ which is appropriate to influence combustion stability $stab$ in order to control, i.e., to stabilize combustion, whereto

■ a correction $\Delta var_C$ of said third manipulated variable $var_C$ is obtained from a fourth controller, and

■ said correction $\Delta var_C$ as output data is used to adjust said third manipulated variable $var_C$ in order to stabilize combustion.

The setpoint for indicated torque, $T_{ind,setpt}$, may be computed from the accelerator pedal position $(a_{ped})$, the torque losses and, if necessary, additional signals like engine speed, gear and the like. For instance, within a feedforward path said torque setpoint, $T_{ind,setpt}$, is first converted into fuel quantity $(w_f)$ which is then converted into the injection duration $(t_{Pulse})$, i.e., the time during which the injector nozzle needs to be open. The setpoint for indicated mean effective pressure, $P_{ind,set}$, can be derived from torque setpoint $T_{ind,setpt}$.

Because the crankshaft is subjected to rotary oscillations also during steady state engine operation due to the changing in-cylinder pressure and inertia of the crank drive components a setpoint for the angular acceleration $\omega'_{setpt}$ can not be constructed. For this reason the first alternative according to method for controlling combustion stability can not be applied when using angular acceleration $\omega'$.

The in-cylinder pressure $p_{cyl}$ created by burning the fuel injected is measured and used for calculating actual indicated torque $T_{ind}$. To this end, indicated mean effective pressure $p_{ind}$ is calculated as the integral of pressure times change in cylinder volume over the whole cycle:

$$p_{ind,full} = \frac{1}{V_d} \int_0^{720} p(\theta) \frac{d}{d\theta} V(\theta) d\theta$$

where $\theta$ is the crank angle and $V_d$ the engine displacement. Often, the integration interval is restricted to the high-pressure part, i.e., to the compression and expansion strokes:

$$p_{ind,hp} = \frac{1}{V_d} \int_{360}^{720} p(\theta) \frac{d}{d\theta} V(\theta) d\theta$$

Other integration intervals are also possible, e.g., from intake valve closure to exhaust valve opening.

Indicated torque $T_{ind}$ (Nm) is derived from the $p_{ind}$:

$$T_{ind} = 10^5 \frac{V_d}{4\pi} p_{ind}$$

This is the torque produced by the in-cylinder pressure $p_{cyl}$.

Angular acceleration $\Delta\omega'$ of the crankshaft can be obtained by means of a crankshaft position sensor which is already disposed on engines in order to provide the engine control unit (ECU) with data required to determine the crankshaft position, i.e., the crank angle.

If the setpoint and the current value of the used parameter - $P_{ind}$ or $T_{ind}$ - are calculated said absolute deviation e of indicated pressure, $p_{ind}$, or indicated torque, $T_{ind}$, with respect to the setpoint simply can be generated by subtraction :

$$e = \Delta p_{ind} = p_{ind} - p_{ind,setpt}$$

or

$$e = \Delta T_{ind} = T_{ind} - T_{ind,setpt}$$

For modem torque-based engine control strategies, it is important to ensure that indicated torque $T_{ind}$ is consistent, especially for future, more stringent emissions standards. Indicated torque $T_{ind}$ derived from in-cylinder pressure $p_{cyl}$ measurements can be used for feedback control, i.e., indicated torque $T_{ind}$ is controlled to the setpoint $T_{ind,setpt}$ via feedback control, i.e., by closing the loop by means of a feedback path, in order to adjust said actual indicated torque $T_{ind}$ by controlling $\Delta T_{ind}$ to zero. As shown, with feedback control, $\Delta T_{ind}$ has to be calculated anyway. Because of this, the first alternative according to the method in question determining the absolute deviation e is preferably applied to engines which are equipped with torque control via feedback control.

The second alternative according to the controlling of combustion stability which determines the relative change $\Delta e$ in the deviation between two consecutive combustion cycles $k$, $k+1$ has the advantage that the setpoints of the used parameter- $p_{ind}$ or $T_{ind}$ - are eliminated. This only leaves the two measurements of the actual absolute values of the parameters for the cycles $k+1$, $k$. This can be demonstrated with the following equations using indicated mean effective pressure $P_{ind}$:

$$\Delta e = p_{k+1,ind} - p_{k,ind}$$

or

$$\Delta e = (p_{k+1,ind,setpt} + \Delta p_{ind,k+1}) - (p_{k,ind,setpt} + \Delta p_{ind,k})$$

or taking into account that the setpoint is constant under steady state conditions with:

$$p_{k+1,ind,setpt} = p_{k,ind,setpt}$$

the change $\Delta e$ in deviation could be expressed as follows:

$$\Delta e = (\Delta p_{ind,k+1} - \Delta p_{ind,k})$$

The embodiment in question can be applied to engines using feedforward control for torque control, i.e., it is not required to determine the setpoint of the used parameter, in particular to control indicated torque $T_{ind}$ to the setpoint $T_{ind,setpt}$ via feedback control. Furthermore the use of the change $\Delta e$ in deviation for monitoring combustion stability allows the application of less cost-intensive pressure sensors. An error in calibration or an offset does not affect the results achieved for $\Delta e$ because such effects can be eliminated by normalizing subtracting the values.

Because no setpoint is required for the application of the second alternative method combustion stability can be monitored by determining the relative change $\Delta e$ in angular acceleration $\omega'$ of the crankshaft between two consecutive combustion cycles $k$, $k+1$, i.e., $(\Delta \omega'_{k+1} - \Delta \omega'_k)$. For this, angular acceleration $\omega'$ is acquired for two consecutive combustion cycles taking into account that for comparison the relative crankshaft position in both cycles has to be the same.

It has to be mentioned that within the present application steady state always defines engine operating conditions which are constant or change just slightly.

With respect to the controlling of combustion stability embodiments are preferred wherein

■ said correction $\Delta var_C$ is read out from at least one lookup table storing said correction $\Delta var_C$ of said third manipulated variable $var_C$ as output data,
■ said at least one lookup table uses scheduling variables describing the engine operating conditions as input data, so that said correction $\Delta var_C$ is engine operating point dependent.
Moreover preferred embodiments are characterized in that said predetermined threshold $e_{threshold}$ or $\Delta e_{threshold}$ is set to 15% or less of the respective setpoint value, i.e., pressure setpoint, $P_{ind,set}$, or torque setpoint, $T_{ind,set}$.

Preferably said predetermined engine operating dependent threshold $e_{threshold}$ or $\Delta e_{threshold}$ is stored in at least one lookup table using at least engine load and engine speed as scheduling variables, so that said threshold is read out from said at least one lookup table by using said scheduling variables as input data.

In the following some procedures are discussed which are preferably applied in order to stabilize the combustion.

A preferred embodiment of the method is characterized in that the burnt mass fraction $F_i$ in the cylinder charge is used as third manipulated variable $var_C$ by providing a correction $\Delta F_{i,stab}$ of said burnt mass fraction setpoint $F_{i,setpt}$ in order to adjust $F_{i,setpt}$ and thus to stabilize combustion.

It is preferred to decrease the burnt mass fraction $F_i$, i.e., $F_{i,setpt}$ in the cylinder charge if combustion is unstable.

In case of an internal combustion engine provided with an exhaust gas recirculation system (EGR) a preferred embodiment of the method is characterized in that the exhaust gas mass fed into the intake manifold is decreased by $\Delta F_{i,stab}$ in order to decrement said burnt mass fraction $F_i$.

Another possibility for decreasing the burnt mass fraction $F_i$ present in the cylinder charge can be realized by influencing the residual gas mass fraction, i.e., the exhaust gas mass located still in the combustion chamber and which is not evacuated during gas exchange period. This can be achieved by controlling the valve opening and closing time. For this a valve system which is at least partially variable is required.

A preferred embodiment of the method is characterized in that said burnt mass fraction $F_i$ is decremented by a specific value $\Delta F_{i,stab}$ which is operating point dependent. In this case it is preferred that said specific value $\Delta F_{i,stab}$ is stored in at least one lookup table using at least one of engine load and engine speed as scheduling variables, so that said value is read out from said at least one lookup table by using said scheduling variables as input data.

While the inventive method is carried out under steady state conditions, each specific engine operation point to deal with differs in engine load and/or engine speed at least. In addition the exhaust gas mass fed into the intake manifold, apart from other engine parameters, depends on the specific operating point conditions. Because of this it is preferred to choose the extent of the specific value $\Delta F_{i,stab}$ operating point dependent. Lookup tables are well known and easy to implement into present control systems so that these tables are appropriate for this purpose.

It is preferred to lower the burnt gas mass fraction $F_{i,stab}$ gradually in order to be sure that an extensive response stabilises the combustion within one step only and in the expectation that one change is sufficient for combustion stabilization. Thereby the number of misfirings due to an unstable combustion can be lowered.

Beside the possibility to stabilize the combustion by decreasing the burnt gas mass fraction $F_{i,stab}$, a preferred embodiment of the combustion stabilisation method is characterized in that intake air charge temperature $\vartheta_{intake}$ is increased if combustion is not stable. This procedure makes use of the effect described in the introduction, in particular of the effect that combustion can be influenced by changing the charge temperature. By increasing the temperature $\vartheta_{intake}$ combustion is stabilized because ignition tends to advance due to the fact that in the cylinder charges the conditions for auto-ignition, in particular the ignition temperature, are reached faster rather than when temperatures are low. Intake air charge temperature $\vartheta_{intake}$ also can be increased by bypassing an intercooler if provided. A heat exchanger can also be used to increase the charge temperature. If possible an increase of the compression ratio can be used to generate higher cylinder charge temperatures during compression in order to stabilize the combustion.

Another preferred embodiment with respect to combustion stabilisation is characterized in that engine temperature $\vartheta_{eng}$ is increased if combustion is not stable. Instead of or in addition to an increase of the intake air charge temperature $\vartheta_{intake}$ the combustion can be stabilized by increasing the engine temperature $\vartheta_{eng}$ in order to increase cylinder charge temperature. For example, this is achieved by lowering the performance of the engine coolant system in order to lower the heat transfer from the cylinder charge to the cylinder liner and the cylinder head forming the combustion chamber.

A preferred embodiment of the method is characterized in that said temperatures $\vartheta_{intake}$ and/or $\vartheta_{eng}$ are/is increased by a specific value $\Delta\vartheta_{intake}$ and/or $\Delta\vartheta_{eng}$ which is operating point dependent. It is referred to the above described embodiment dealing with a specific value $\Delta F_{i,stab}$ for the burnt mass fraction $F_i$.

A preferred embodiment of the method is characterized in that said specific value $\Delta\vartheta_{intake}$ and/or $\Delta\vartheta_{eng}$ is stored in at least one lookup table using at least one of engine load and engine speed as scheduling variables, so that said specific value is read out from said at least one lookup table by using said scheduling variables as input data. Concerning the use of lookup tables it is referred to the above mentioned.

A preferred embodiment of the method is characterized in that engine operation is supervised for detecting transition from steady state operation to transient operation in order to disable monitoring and/or influencing combustion stability in transient operation.

It is necessary to supervise engine operation in order to decide if the determined deviation e or change $\Delta e$ in deviation is caused by combustion instability or, on the other hand, transient engine operation is responsible for a change in indicated torque, indicated mean effective pressure and/or angular acceleration.

If the internal combustion engine is provided with an exhaust gas recirculation system (EGR) a method is preferred with respect to control combustion speed $CG$ and/or combustion stability $stab$, which is characterized in that

■ the exhaust gas mass fed into the intake manifold is decreased in order to decrement said burnt mass fraction $F_i$ and/or
■ the exhaust gas mass fed into the intake manifold is increased in order to increment said burnt mass fraction $F_i$.

This method is already discussed in detail for controlling combustion stability.

A preferred embodiment of the method is characterized in that

■ a supervising element is used for monitoring if the controlling of combustion speed $CG$ and combustion stability $stab$ generate conflicting requirements for the burnt mass fraction setpoint $F_{i,setpt}$ by asking for corrections $\Delta F_{i,CG}$ and $\Delta F_{i,stab}$ with different algebraic sign,
■ a counter is used which is incremented if conflicting requirements are generated, and
■ HCCI operation of the engine is disabled when the counter reaches a predetermined threshold $x_{thres}$.

With respect to embodiments which use the burnt mass fraction $F_i$ for controlling both combustion speed $CG$ and combustion stability $stab$, i.e., in cases in which the burnt mass fraction $F_i$ is used as said manipulated variable $var_B$ and said manipulated variable $var_B$ is equal to said manipulated variable $var_C$ a supervising element is required to monitor if the control signals of the respective controllers result in a controlling conflict in such a way that both requirements cannot be fulfilled simultaneously. A counter realises and counts the conflict events in order to abandon the controlling if a certain threshold $x_{thres}$ is reached.

A preferred embodiment of the method is characterized in that

■ a subordinate controller is applied which uses said correction $\Delta F_{i,CG}$ generated by said third controller and/or said correction $\Delta F_{i,stab}$ generated by said fourth controller as input data in order to update the burnt mass fraction setpoint $F_{i,\ setpt}$.

According to a preferred embodiment said subordinate controller uses the sum of said corrections $\Delta F_{i,CG}$ and $\Delta F_{i,stab}$ as setpoint.

Three embodiments of the present invention will be described below with reference to the Figures 1 to 3:

Figure 1     shows schematically a first embodiment according to the inventive method of controlling $SOC$ by means of feedback control,

Figure 2     shows schematically a second embodiment according to the inventive method of controlling $SOC$ by means of feedback control, and

Figure 3     shows schematically a third embodiment according to the inventive method of controlling $SOC$ by means of feedback control in combination with a controlling of combustion speed $CG$ and combustion stability $stab$.

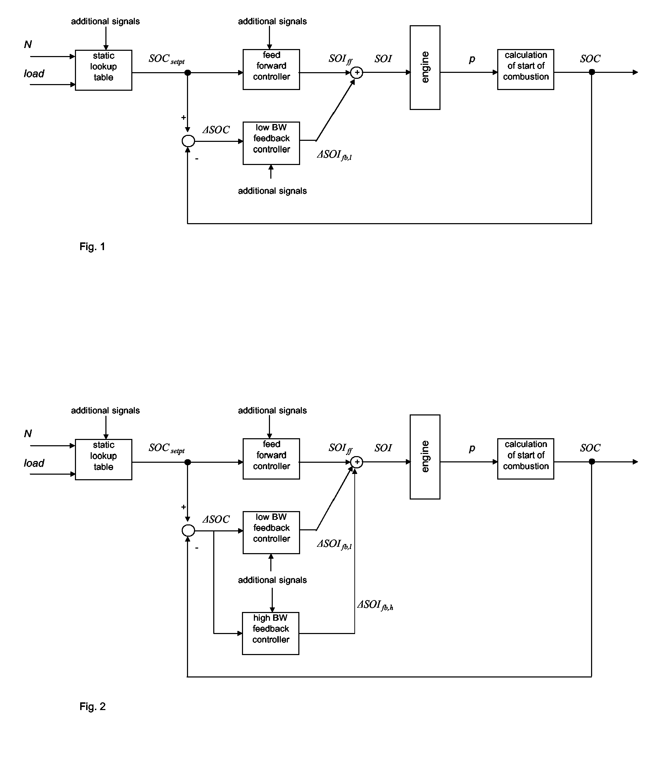

Figures 1 shows schematically a first embodiment according to the inventive method of controlling $SOC$ by means of feedback control.

The setpoint $SOC_{setpt}$ for start of combustion is computed from engine speed and engine load taking into account that $SOC_{setpt}$ is engine operating point dependent. If necessary, additional signals characterizing the engine operating conditions in more detail may be used for determining the setpoint for start of combustion $SOC_{setpt}$. Such an additional signal is the engine temperature $\vartheta_{eng}$ or the burnt mass fraction $F_i$ in the intake manifold or the like.

The calculated setpoint $SOC_{setpt}$ is converted within a feedforward path into a first manipulated variable $var_A$ which is appropriate to influence, i.e., to adjust, start of combustion $SOC$. The method illustrated in Figure 1 uses start of injection $SOI_{ff}$ as first manipulated variable $var_A$.

The advantage of this feedforward control is that it is very fast. At tip-in, the setpoint for $SOC$ can be changed substantially from one combustion event to the next. However, due to the fact that low temperature combustion is less stable than conventional combustion and more sensitive to changes in operation and boundary conditions, the $SOC$ achieved will never match the setpoint exactly. Due to this the start of combustion $SOC$ is controlled by means of feedback control which is described in the following.

The in-cylinder pressure $p_{cyl}$ created by burning the fuel injected during injection pulse duration is measured and used for calculating actual start of combustion $SOC$ which is controlled to the setpoint $SOC_{setpt}$ via feedback control. For this the feedback path is provided with a first controller (low BW feedback controller) which uses the deviation $\Delta SOC$ between setpoint $SOC_{setpt}$ and actual value $SOC$ for start of combustion as an input to provide a correction $\Delta SOI_{fb,l}$ of said first manipulated variable, i.e., of start of injection $SOI$ as output data. That correction $\Delta SOI_{fb,l}$ is used to adjust the first manipulated variable $SOI_{ff}$ generated within the feedforward path. The actual value of start of injection $SOI$ is adjusted by the correction as follows:

$$SOI = SOI_{ff} + \Delta SOI_{fb,l}$$

The first controller is provided with a low bandwidth $b_{loW}$ in order to make said first manipulated variable *SOI* less sensitive to the signal noise of *SOC* by slowing down the convergence of the actual value *SOC* to the setpoint $SOC_{setpt}$, if deviation $\Delta SOC$ is affected substantially by signal noise. Furthermore the low bandwidth $b_{low}$ of the first controller ensures that a noticeable correction $\Delta SOI_{fb,l}$ is only provided during substantially steady-state conditions.

Preferably the controller uses at least one lookup table storing the correction $\Delta SOI_{fb,l}$ of start of injection *SOI* as output data, while the deviation $\Delta SOC$ between setpoint $SOC_{setpt}$ and actual value *SOC* for the start of combustion is used as an input for updating at least one lookup table.

Additional signals may be used for scheduling the at least one lookup table in order to enable a fast controller reaction during transient conditions, when the engine operating conditions are changing such that the correction $\Delta SOI_{fb,l}$ is read out from said at least one lookup table by using the scheduling parameters as input data.

Figure 2 shows schematically a second embodiment according to the inventive method of controlling *SOC* by means of feedback control. In the following only the additional features with respect to the embodiment illustrated in Figure 1 are discussed. Otherwise it is referred to Figure 1.

In contrast or in addition to the method illustrated in Figure 1 the feedback path is provided with a second controller (high BW feedback controller).

This second controller uses also the deviation $\Delta SOC$ between setpoint $SOC_{setpt}$ and actual value *SOC* for the start of combustion as an input to provide a correction $\Delta SOI_{fb,h}$ for start of injection as output data which is used to adjust the manipulated variable *SOI* and thus to adjust the actual value for start of combustion *SOC.*

The second controller is located in parallel to the first controller and is provided with a high bandwidth $b_{high}$ and high-pass characteristics in order to control transient behaviour without influencing the steady-state behaviour. The bandwidth $b_{high}$ of the second controller is higher than the bandwidth $b_{low}$ of said first controller.

The second controller can be considered to be disabled when the engine operates under steady-state conditions. As a result the second controller does not influence the steady-state behaviour of the first controller On the other hand such a high bandwidth $b_{high}$ enables the second controller to control the start of combustion *SOC* during transient engine operation conditions under which the low bandwidth $b_{low}$ of said first controller prevents the passing of signals completely or just strongly damped.

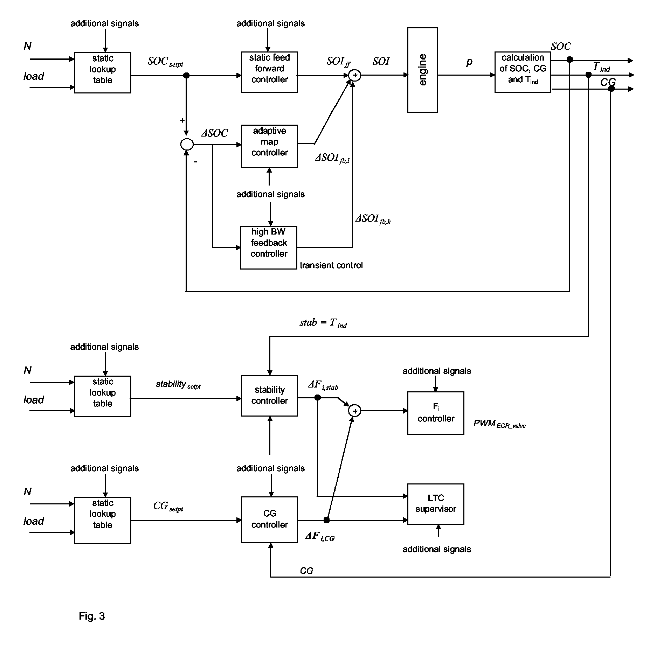

Figure 3 shows a third embodiment according to the inventive method of controlling *SOC* by means of feedback control. The illustrated embodiment of the method comprises in addition to the controlling of *SOC* a controlling of combustion speed *CG* and a controlling of combustion stability *stab.*

The setpoint $CG_{setpt}$ for combustion speed *CG* is computed from engine speed N and engine load. Additional signals describing the engine operating conditions may be used if necessary.

The in-cylinder pressure $P_{cyl}$ is measured and used for calculating actual combustion speed *CG* which is controlled to the setpoint $CG_{setpt}$ via feedback control. The feedback path is provided with a third controller which uses the deviation $\Delta CG$ between setpoint $CG_{setpt}$ and actual value *CG* for the combustion speed as an input in order to adjust combustion speed *CG.*

As can be seen the third controller uses the burnt mass fraction $F_i$ as a second manipulated variable to influence combustion speed *CG.* For this a correction $\Delta F_{i,CG}$ for the burnt mass fraction is provided as output data to adjust said second manipulated variable $F_{i,setpt}$ and thus to adjust said actual combustion speed *CG.*

The embodiment of the method shown in Figure 3 uses the deviation $\Delta CG$ between setpoint $CG_{setpt}$ and actual value *CG* for the combustion speed as an input for updating at least one lookup table storing corrections $\Delta F_{i,CG}$ for the burnt mass fraction $F_i$ as output data which is used as manipulated variable.

The at least one lookup table uses additional signals as scheduling variables describing the engine operating conditions as input data, so that the correction $\Delta F_{i,CG}$ is engine operating point dependent.

The combustion stability *stab* is also monitored and controlled within the scope of the embodiment in question.

For this the in-cylinder pressure $P_{cyl}$ created by burning the fuel injected is measured and used for calculating actual indicated torque $T_{ind}$. Either the absolute deviation $\Delta T_{ind}$ of indicated torque $T_{ind}$ with respect to actual indicated torque setpoint $T_{ind,setpt}$ may be determined or alternatively the relative change $(\Delta T_{ind,k+1} - \Delta T_{ind,k})$ between two consecutive combustion cycles *k, k+1* may be determined. The setpoint for indicated torque, $T_{ind,setpt,}$ may be computed from the accelerator pedal position ($\alpha_{ped}$), the torque losses and, if necessary, additional signals like engine speed, gear and the like. Assumed that $T_{ind,setpt}$ is computed and available within the method illustrated in Figure 3 absolute deviation $\Delta T_{ind}$ of indicated torque $T_{ind}$ with respect to actual indicated torque setpoint $T_{ind,setpt}$ is determined.

However, combustion stability *stab* is controlled via feedback control and the deviation $\Delta T_{ind}$ is compared with a predetermined engine operating point dependent threshold $e_{threshold}$ in order to decide if the combustion is stable or not by means of the following inequalities:

$$|e| > e_{threshold} \text{ or } |\Delta e| > \Delta e_{threshold} \text{ means combustion is unstable,}$$

$$|e| \leq e_{threshold} \text{ or } |\Delta e| \leq \Delta e_{threshold} \text{ means combustion is stable,}$$

If combustion is unstable, combustion stability *stab* is controlled by a third manipulated variable which is appropriate to influence combustion stability *stab*. As already known from the controlling of combustion speed *CG* the burnt mass fraction $F_i$ is used as third manipulated variable to stabilize combustion

A correction $\Delta F_{i,stab}$ of said third manipulated variable $F_i$ is provided by a fourth controller as output data to adjust the burnt mass fraction $F_i$ and thus to stabilize combustion.

The correction $\Delta F_{i,stab}$ is read out from at least one lookup table storing said correction $\Delta F_{i,stab}$ of burnt mass fraction as output data. The at least one lookup table uses additional signals as scheduling variables describing the engine operating conditions as input data, so that said correction $\Delta F_{i,stab}$ is engine operating point dependent.

Due to the fact that the burnt mass fraction $F_i$ is used as manipulated variable for controlling both combustion speed *CG* and combustion stability *stab,* a supervising element is required to monitor if the control signals of the third and fourth controller result in a controlling conflict in such a way that both requirements cannot be fulfilled simultaneously. A counter realises and counts the conflict events in order to abandon the controlling if a certain threshold $x_{thres}$, i.e., predetermined number of conflict events, is reached.

Moreover a subordinate controller is applied which uses the sum of both corrections $\Delta F_{i,CG}$ and $\Delta F_{i,stab}$ as setpoint correction, i.e., as input data in order to update the burnt mass fraction setpoint $F_{i,setpt}$. This subordinate controller then sets the means to influence $F_i$, e.g., by adjusting the EGR valve position.

Reference signs

| | |
|---|---|
| $\alpha_{ped}$ | accelerator pedal position |
| $b_{low}$ | low bandwidth of the first controller |
| $b_{high}$ | high bandwidth of the second controller |
| CA | crank angle |
| *CG* | combustion speed, combustion gradient |
| $CG_{setpt}$ | setpoint for combustion speed |
| $\Delta CG$ | deviation between setpoint $CG_{setpt}$ and actual value *CG* for the combustion speed |
| CO | carbon monoxides |
| ECU | engine control unit |
| EGR | exhaust gas recirculation |
| *e* | deviation between setpoint and actual value of the used parameter |
| $e_{threshold}$ | threshold with respect to e |
| $\Delta e$ | change in the respective deviation e |
| $\Delta e_{threshold}$ | threshold with respect to $\Delta e$ |
| $f_i$ | frequency of a harmonic |
| $F_i$ | burnt mass fraction in the cylinder charge |
| $F_{i,setpt}$ | setpoint for the burnt mass fraction setpoint $F_i$ |
| $\Delta F_i$ | change in burnt mass fraction $F_i$ by a specific value |
| $\Delta F_{i,CG}$ | correction of burnt mass fraction setpoint $F_{i,setpt}$ with respect to the third controller |
| $\Delta F_{i,stab}$ | correction of burnt mass fraction setpoint $F_{i,setpt}$ with respect to the fourth controller |
| HC | unburned hydrocarbons |
| HCCI | homogeneous charge compression ignition |
| hp | high-pressure part |
| $\theta$ | crank angle of the crankshaft |
| $\theta_e$ | crank angle of the crankshaft for end of combustion |
| $\theta_{05}$ | crank angle at which 5% of the fuel mass injected is burned |
| $\theta_{10}$ | crank angle at which 10% of the fuel mass injected is burned |
| $\theta_{20}$ | crank angle at which 20% of the fuel mass injected is burned |
| $\theta_{50}$ | crank angle at which 50% of the fuel mass injected is burned |

| | | |
|---|---|---|
| $k$ | number of an operation cycle |
| $k+1$ | number of an operation cycle consecutive to cycle $k$ |
| LTC | low temperature combustion |
| $\lambda$ | air/fuel ratio |
| $\mu(p_{ind})$ | mean value of indicated mean effective pressure $p_{ind}$ |
| $\mu(T_{ind})$ | mean value of indicated torque $T_{ind}$ |
| $NO_x$ | nitrogen oxides |
| PCCI | premixed charge compression ignition |
| $p_{cyl}$ | in-cylinder pressure |
| $P_{ind}$ | actual value $P_{ind}$ of indicated pressure |
| $P_{ind,setpt}$ | indicated pressure setpoint |
| $\Delta p_{ind}$ | deviation between setpoint $p_{ind,setpt}$ and actual value $p_{ind}$ of indicated mean effective pressure |
| $Q_{HR}$ | cumulated heat release |
| $Q_{HR,max}$ | maximum value of $Q_{HR}$ |
| $Q_{HR,min}$ | minimum value of $Q_{HR}$ |
| $\sigma(p_{ind})$ | standard deviation in indicated mean effective pressure $p_{ind}$ |
| $\sigma(T_{ind})$ | standard deviation in indicated torque $T_{ind}$ |
| $SOC$ | start of combustion |
| $SOC_{setpt}$ | setpoint for $SOC$ |
| $\Delta SOC$ | deviation between setpoint $SOC_{setpt}$ and actual value $SOC$ for the start of combustion |
| $SOI$ | start of injection |
| $SOI_{pilot}$ | start of the first injection, i.e., start of pilot-injection |
| $SOI_{main}$ | start of the main injection |
| $\Delta SOI_{fb,l}$ | correction of $SOI$ with respect to the first controller |
| $\Delta SOI_{fb,h}$ | correction of the $SOI$ with respect to the second controller |
| $stab$ | combustion stability |
| $t_{pulse}$ | injection duration |
| $T$ | torque demand |
| $T_{ind}$ | actual value $T_{ind}$ of indicated torque |
| $\Delta T_{ind}$ | deviation between setpoint $T_{ind,setpt}$ and actual value $T_{ind}$ of indicated torque |
| $T_{ind,setpt}$ | indicated torque demand, indicated torque setpoint |
| TDC | top dead centre |
| $\vartheta_{eng}$ | engine temperature |
| $\Delta\vartheta_{eng}$ | change in engine temperature $\vartheta_{eng}$ by a specific value |
| $\vartheta_{intake}$ | intake air charge temperature |
| $\Delta\vartheta_{intake}$ | change in intake air charge temperature $\vartheta_{intake}$ by a specific value |
| $var_A$ | first manipulated variable |
| $\Delta var_{A,fb,l}$ | correction of the first manipulated variable $var_A$ with respect to the first controller |
| $\Delta var_{A,fb,h}$ | correction of the first manipulated variable $var_A$ with respect to the second controller |
| $var_B$ | second manipulated variable |
| $\Delta var_B$ | correction of the second manipulated variable $var_A$ with respect to the third controller |
| $var_c$ | third manipulated variable |
| $\Delta var_C$ | correction of the third manipulated variable $var_A$ with respect to the fourth controller |
| $V$ | cylinder volume as a function of crank angle $\theta$ |
| $\gamma$ | specific heat ratio |
| $V_d$ | engine displacement |
| $w_f$ | fuel quantity, fuel mass or fuel volume |
| $\omega$ | angular speed |
| $\omega'$ | angular acceleration |
| $x_{thres}$ | threshold for the number of conflict events detected and counted by the counter of the supervising element |

**Claims**

1. A method of controlling start of combustion ($SOC$) for an internal combustion engine provided with a crankshaft and at least one cylinder and operated in HCCI mode by means of feedback control, wherein

   ■ the setpoint $SOC_{setpt}$ for start of combustion is computed from at least one of engine speed and engine load

**15**

and, if necessary, additional signals characterizing the engine operating conditions,

■ said setpoint $SOC_{setpt}$ is converted within a feedforward path into a first manipulated variable $var_A$ which is appropriate and used to influence, i.e., to adjust, start of combustion $SOC$,

■ the in-cylinder pressure $P_{cyl}$ created by burning the fuel injected during injection pulse duration is measured and used for calculating actual start of combustion $SOC$,

■ said actual start of combustion $SOC$ is controlled to the setpoint $SOC_{setpt}$ via feedback control, i.e., by closing the control loop by means of a feedback path, in order to adjust said actual start of combustion $SOC$,

■ said feedback path is provided with a first controller which uses, possibly in addition to other signals which describe the engine operating conditions, the deviation $\Delta SOC$ between setpoint $SOC_{setpt}$ and actual value $SOC$ for the start of combustion as an input and provides a correction $\Delta var_{A,fb,l}$ of said first manipulated variable $var_A$ as output data to adjust said first manipulated variable $var_A$ and thus said actual start of combustion $SOC$,

■ said first controller is provided with a low bandwidth $b_{low}$ due to noise on the measured in-cylinder pressure signal, $P_{cyl}$, and thus on the calculated start of combustion, $SOC$, in order to make said first manipulated variable $var_A$ less sensitive to the noise of $SOC$ by slowing down the convergence of the actual value $SOC$ to the setpoint $SOC_{setpt}$, if deviation $\Delta SOC$ is affected substantially by signal noise or in order to provide corrections $\Delta var_{A,fb,l}$ only during nearly stationary operation.

2. A method according to claim 1, **characterized in that**

■ said deviation $\Delta SOC$ between setpoint $SOC_{setpt}$ and actual value $SOC$ for the start of combustion is used as an input for updating at least one lookup table storing the correction $\Delta var_A$ of said first manipulated variable $var_A$ as output data,

■ said additional signals are used for scheduling said at least one lookup table in order to enable a fast controller reaction during transient conditions, when the engine operating conditions are changing such that the correction $\Delta var_{A,fb,l}$ of said manipulated variable $var_A$ is read out from said at least one lookup table by using the scheduling parameters as input data.

3. A method according to claim 1, **characterized in that** said bandwidth $b_{low}$ is lower than each of the frequencies $f_i$ with large magnitude in the spectrum of the calculated $SOC$, such that the relation between the bandwidth $b$ and the frequencies $f_i$ is described by the following expression: $blow < f_i$.

4. A method according to any of the preceding claims, **characterized in that**

■ said feedback path is provided with a second controller which uses, possibly in addition to other signals which describe the engine operating conditions, the deviation $\Delta SOC$ between setpoint $SOC_{setpt}$ and actual value $SOC$ for the start of combustion as an input and provides a correction $\Delta var_{A,fb,h}$ of said first manipulated variable $var_A$ as output data to adjust said first manipulated variable $var_A$ and thus said actual start of combustion $SOC$,

■ said second controller is located in parallel to said first controller and in addition is provided with a high bandwidth $b_{high}$ in order to control transient behaviour without influencing the steady-state behaviour.

5. A method according to claim 4, **characterized in that** said bandwidth $b_{high}$ is higher than the bandwidth $b_{low}$ of said first controller: $b_{high} > b_{low}$.

6. A method according to any of the preceding claims, **characterized in that** start of injection ($SOI$) is used as first manipulated variable $var_A$, i.e., the correction $\Delta SOI_{fb,l}$ of start of injection $SOI$ with respect to the first controller and possibly in addition the correction $\Delta SOI_{fb,h}$ of start of injection $SOI$ with respect to the second controller in order to adjust $SOI$ and thus to adjust said actual start of combustion $SOC$.

7. A method according to any of the preceding claims, **characterized in that** start of combustion $SOC$ is defined by a specific predetermined percentage for burnt fuel mass of the fuel injected during fuel injection duration.

8. A method according to any of the preceding claims, **characterized in that** in addition combustion speed *(CG)* is controlled by means of a feedback path, i.e., by means of feedback control, wherein

■ the setpoint $CG_{setpt}$ for combustion speed is computed from at least engine speed and engine load and, if necessary, additional signals characterizing the engine operating conditions,

■ the in-cylinder pressure $p_{cyl}$ is used for calculating actual combustion speed $CG$,

■ said actual combustion speed $CG$ is controlled to the setpoint $CG_{setpt}$ via feedback control in order to adjust said actual combustion speed *CG,*
■ said feedback path is provided with a third controller which uses the deviation $\Delta CG$ between setpoint $CG_{setpt}$ and actual value *CG* for the combustion speed as an input and provides a correction $\Delta var_B$ of a second manipulated variable $var_B$ which is appropriate to influence combustion speed *CG,* and
■ using said correction $\Delta var_B$ as output data to adjust said second manipulated variable $var_B$ and thus to adjust said actual combustion speed *CG.*

9.  A method according to claim 8, **characterized in that**

■ said deviation $\Delta CG$ between setpoint $CG_{setpt}$ and actual value *CG* for the combustion speed as an input for updating at least one lookup table storing a correction $\Delta var_B$ of a second manipulated variable $var_B$ as output data,
■ said at least one lookup table uses scheduling variables describing the engine operating conditions as input data, so that said correction $\Delta var_B$ is engine operating point dependent.

10. A method according to claim 8 or 9, **characterized in that** combustion speed *CG* is computed from a crank angle interval it takes to burn a certain predetermined percentage of fuel mass injected during fuel injection duration.

11. A method according to any of the claims 8 to 10, **characterized in that** the burnt mass fraction $F_i$ in the cylinder charge is used as second manipulated variable $var_B$ by providing a correction $\Delta F_{i,CG}$ of burnt mass fraction setpoint $F_{i,setpt}$ with respect to the third controller in order to adjust $F_{i,setpt}$ and thus to adjust said actual combustion speed *CG.*

12. A method according to claim 11, **characterized in that** the burnt mass fraction $F_i$, i.e., $F_{i,setpt}$ is increased in order to lower combustion speed *CG.*

13. A method according to claim 11 or 12, **characterized in that** the burnt mass fraction $F_i$, i.e., $F_{i,setpt}$ is decreased in order to increase combustion speed *CG.*

14. A method according to any of the preceding claims, **characterized in that** combustion stability *stab* is monitored by the following steps:

■ determining the absolute deviation e of indicated mean effective pressure $p_{ind}$ or indicated torque $T_{ind}$ with respect to their actual setpoint, i.e., with respect to actual indicated mean effective pressure setpoint $P_{ind,setpt}$ or actual indicated torque setpoint $T_{ind,\text{setpt}}$, namely $\Delta p_{ind}$ or $\Delta T_{ind,}$ or alternatively determining the relative change $\Delta e$ in said deviation between two consecutive combustion cycles *k, k+1* of said at least one cylinder, i.e., determining $(\Delta P_{ind,k+1} - \Delta p_{ind,k})$ or $(\Delta T_{ind,k+1} - \Delta T_{ind,k})$ or determining the relative change $\Delta e$ in angular acceleration $\omega'$ of the crankshaft between two consecutive combustion cycles *k, k+1,* i.e., $(\Delta \omega'_{k+1} - \Delta \omega'_k),$ and
■ comparing said determined deviation e or said change $\Delta e$ with a predetermined engine operating point dependent threshold $e_{threshold}$ or $\Delta e_{threshold}$ in order to decide if the combustion is stable or not by means of the following inequalities:

$$|e| > e_{threshold} \text{ or } |\Delta e| > \Delta e_{threshold} \text{ means combustion is unstable,}$$

$$|e| \leq e_{threshold} \text{ or } |\Delta e| \leq \Delta e_{threshold} \text{ means combustion is stable.}$$

15. A method according to claim 14, **characterized in that**, if combustion is unstable, combustion stability *stab* is controlled by means of

■ a third manipulated variable $var_C$ which is appropriate to influence combustion stability *stab* in order to control, i.e., to stabilize combustion, whereto
■ a correction $\Delta var_C$ of said third manipulated variable $var_C$ is obtained from a fourth controller, and
■ said correction $\Delta var_C$ as output data is used to adjust said third manipulated variable $var_C$ in order to stabilize combustion.

16. A method according to claim 15, **characterized in that** said

■ said correction $\Delta var_C$ is read out from at least one lookup table storing said correction $\Delta var_C$ of said third manipulated variable $var_C$ as output data,
■ said at least one lookup table uses scheduling variables describing the engine operating conditions as input data, so that said correction $\Delta var_C$ is engine operating point dependent.

**17.** A method according to any of the claims 14 to 16, **characterized in that** said predetermined threshold $e_{threshold}$ or $\Delta e_{threshold}$ is set to 15% or less of the respective setpoint value, i.e., pressure setpoint, $p_{ind,setpt}$, or torque setpoint, $T_{ind,setpt}$.

**18.** A method according to any of the claims 15 to 17, **characterized in that** the burnt mass fraction $F_i$ in the cylinder charge is used as third manipulated variable $var_C$ by providing a correction $\Delta F_{i,stab}$ of said burnt mass fraction setpoint $F_{i,setpt}$ in order to adjust $F_{i,setpt}$ and thus to stabilize combustion.

**19.** A method according to claim 18, **characterized in that** the burnt mass fraction $F_i$, i.e., $F_{i,setpt}$, in the cylinder charge is decreased if combustion is unstable.

**20.** A method according to any of the claims 11 to 19 for an internal combustion engine provided with an exhaust gas recirculation system (EGR), **characterized in that**

■ the exhaust gas mass fed into the intake manifold is decreased in order to decrement said burnt mass fraction $F_i$ and/or
■ the exhaust gas mass fed into the intake manifold is increased in order to increment said burnt mass fraction $F_i$.

**21.** A method according to any of the claims 18 to 20, **characterized in that**

■ a supervising element is used for monitoring if the controlling of combustion speed $CG$ and combustion stability $stab$ generate conflicting requirements for the burnt mass fraction setpoint $F_{i,setpt}$ by asking for corrections $\Delta F_{i,CG}$ and $\Delta F_{i,stab}$ with different algebraic sign,
■ a counter is used which is incremented if conflicting requirements are generated, and
■ HCCI operation of the engine is disabled when the counter reaches a predetermined threshold $x_{thres}$.

**22.** A method according to any of the claims 18 to 21, **characterized in that**

■ a subordinate controller is applied which uses said correction $\Delta F_{i,CG}$ generated by said third controller and/or said correction $\Delta F_{i,stab}$ generated by said fourth controller as input data in order to update the burnt mass fraction setpoint $F_{i,\ setpt}$ and to set the means which control $F_i$ as output data.

**23.** A method according to claim 22, **characterized in that**

■ said subordinate controller uses the sum of said corrections $\Delta F_{i,CG}$ and $\Delta F_{i,stab}$ as setpoint correction.

EP 1 744 037 A1

Fig. 1

Fig. 2

Fig. 3

**European Patent Office**

**EUROPEAN SEARCH REPORT**

Application Number

EP 05 10 6476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/179052 A1 (GANSER THOMAS ET AL) 5 December 2002 (2002-12-05) * page 1, paragraph 7 - page 1, paragraph 8 * * page 2, paragraph 11 - page 2, paragraph 11 * ----- | 1-23 | F02D35/00 F02D41/40 |
| X | US 2004/084025 A1 (ZHU GUOMING G ET AL) 6 May 2004 (2004-05-06) * page 1, paragraph 10 - page 1, paragraph 16 * ----- | 1-23 | |
| X | FR 2 852 355 A (RENAULT S.A.S) 17 September 2004 (2004-09-17) * page 4, line 16 - page 5, line 4 * ----- | 1-23 | |
| X | PATENT ABSTRACTS OF JAPAN vol. 2002, no. 02, 2 April 2002 (2002-04-02) & JP 2001 304027 A (MITSUBISHI HEAVY IND LTD), 31 October 2001 (2001-10-31) * abstract * ----- | 1-23 | TECHNICAL FIELDS SEARCHED (IPC) F02D |

The present search report has been drawn up for all claims

| Place of search | Date of completion of the search | Examiner |
|---|---|---|
| Munich | 4 November 2005 | Jackson, S |

EPO FORM 1503 03.82 (P04C01)

**ANNEX TO THE EUROPEAN SEARCH REPORT**
**ON EUROPEAN PATENT APPLICATION NO.**

EP 05 10 6476

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2005

| Patent document cited in search report | Publication date | Patent family member(s) | Publication date |
|---|---|---|---|
| US 2002179052 A1 | 05-12-2002 | NONE | |
| US 2004084025 A1 | 06-05-2004 | DE 10351171 A1<br>GB 2396025 A<br>JP 2004156596 A | 05-08-2004<br>09-06-2004<br>03-06-2004 |
| FR 2852355 A | 17-09-2004 | WO 2004083612 A2 | 30-09-2004 |
| JP 2001304027 A | 31-10-2001 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0905361 B1
- US 6390054 B1
- US 6390054 B
- US 20040103860 A1